# EUROPEAN PATENT SPECIFICATION

(11) **EP 0 696 390 B1**
(45) Date of publication and mention of the grant of the patent: **22.07.1998**
(21) Application number: 94913128.8
(22) Date of filing: 26.04.1994
(51) Int. Cl.: H02G 7/20

(54) **SHIELDED HIGH-VOLTAGE OVERHEAD LINE**
GESCHIRMTE HOCHSPANNUNGSFREILEITUNG
LIGNE AERIENNE BLINDEE A HAUTE TENSION

(30) Priority: 27.04.1993 FI 931896
(43) Date of publication of application: 14.02.1996
(73) Proprietor: IMATRAN VOIMA OY, 00100 Helsinki (FI); NK Cables Oy, 02110 Espoo (FI)
(72) Inventor: NOUSMAA, Ilmo, FIN-01600 Vantaa (FI); OJALA, Yrjö, FIN-02660 Espoo (FI); MATIKAINEN, Keijo, FIN-02720 Espoo (FI); HINKKURI, Antero, FIN-01280 Vantaa (FI)
(74) Representative: Howden, Christopher Andrew
(86) International application number: FI9400158
(87) International publication number: WO9426013

(56) References cited:
- NO-B- 154 109

## Description

The present invention relates to a high-voltage overhead line for voltages in excess of 40 kV, in particular for voltages in excess of 100 kV, having aerially drawn phase conductors supported on a pole construction.

A shielded high-voltage overhead line, i.e. PAS line, employs plastic-coated conductors instead of conventional bare conductors. The insulator is often a cross-linked polyethylene, XLPE (PEX). The thin insulation is dimensioned to withstand voltage stresses resulting from hitting together of the conductors and, up to medium voltages, also to withstand contact with trees or the like.

PAS lines for 20 kV voltage have been constructed in Finland since the early 1980s. Often a PAS line provides an alternative to the much costlier underground line solution. Furthermore, PAS lines for 20 kV voltage are more reliable in use than conventional overhead lines, since hitting together of the conductors does not normally cause disruptions or damage the conductors.

Bulletin No. T 68-91 of the Finnish Electrical Inspectorate (SETI) specifies the requirements for plastic-coated overhead lines with no metal sheathing intended for a voltage of 20 kV. In accordance with this bulletin, the same spacing requirements are generally applied to the conductors of a PAS line as to a bare overhead line, since the conductor coating does not meet the requirements for shielding from contact. Yet at some points said regulations may be departed from when PAS conductors are used. The most significant of these exceptions is the minimum spacing between the fixing points of the conductors, which may be one third of the spacing specified in the current regulations. Furthermore, distance from trees may be slightly more than 50% smaller than with conventional lines, since the insulation of the conductors withstands the leaning of a fallen tree even for months. This reduces the necessary width of the conductor streets and thereby diminishes the cost for land acquisition. There are no corresponding regulations for high-voltage lines for 110 kV and higher, since no insulated overhead lines for 110 kV and higher (e.g. 220 kV, 400 kV) are in use. The pole constructions, insulators and insulating and conductor fittings in current use are mainly designed for bare conductors. Even though a 110 kV PAS line withstood a tree leaning against it for a couple of hours, no tree contact with the conductor can be allowed on account of high leakage currents and radio interference. A flash-over or corona effect caused by a lightning stroke has not been earlier studied at these voltage rates and conductors at all, since insulation of high-voltage lines as such has not been contemplated to solve other problems than at most the short-circuit problem produced by contact of the conductors if the conductors are brought closer to each other and nearer the surrounding woods than heretofore.

NO-B-154109 discloses a high-voltage overhead line having aerially drawn insulated phase conductors supported on a pole construction. These conductors are insulated by a thin layer of weatherproof plastic material *inter alia* to provide a hard and smooth surface to prevent built-up of snow and ice. However, such a thin layer of weatherproof plastic material is not suitable to be used for voltages in excess of 100 kV.

Increasingly during the past decade, attention has also been paid to the electric and magnetic fields generated by power lines. Limits for the magnetic and electric fields of power lines have already been specified in some states of the U.S.A. and in Italy. Electric and magnetic fields produced by overhead lines can be diminished by the relative location of the conductors. Disposing the conductors as close as possible to one another, for example at the apices of an equilateral triangle, affords minimum fields to be obtained. In electric lines, hitting together of the bare conductors produces a short circuit. The minimum spacings required to prevent the hitting together and corona effects as well as the lack of suitable and durable insulation have in practice prevented the use of other than conventional methods of laying conductors. The installation method most commonly employed in Finland is horizontal installation on towers, enabling reduction in the height of pole constructions. The minimum spacing between the conductors is of the order of 3.5 m with 110 kV, and thus the width of the line clearing will be at least 16 m when spans of 200 m are applied. In practice, however, the phase spacing for a conventional conductor is about 4.5 m and the necessary line clearing 26 m.

Therefore, the above factors have lead to a situation where at least in medium- and high-voltage overhead lines bringing the conductors closer to one another would be highly preferable and advantageous for reasons of economy (for example narrowing the conductor street) as well as for environmental reasons (diminishing the sphere of influence of electric and magnetic fields), but to realize this by the current techniques is in contradiction with the construction principles for high-voltage lines.

It is an object of the present invention to provide a high-voltage overhead line substantially reducing the spacing needed between the phase conductors and thus providing an overhead line suitable for narrower conductor streets and generating smaller electric and magnetic fields as compared with the current overhead lines. For achieving this object, the high-voltage overhead line of the invention is characterized in that the conductors are insulated, that the spacing between them at the support points of the poles is smaller than the minimum spacing needed to avoid contact between the conductors, and that at least two of the conductors are located at different heights in the vertical direction.

With suitable selection and location of the phase conductors of an overhead line according to the invention, and with considerable work invested in different tests for finding a suitable conductor type, the high-voltage overhead line of the invention has been achieved. This line solves several of the problems associated with power lines of conventional construction. For example in the case of a 110 kV tower line, the conductor streets can be diminished from the present minimum width of 16 m to 10 m (delta installation). With vertical setout of the conductors, on the other hand, considerable reduction in pole height is achieved. Also the strength of the electric and magnetic fields is considerably diminished from the field strength of the current lines, as will be seen hereinafter.

Other preferred embodiments of the invention are characterized in that which is set forth in the ensuing claims.

In the following the invention will be described in greater detail by means of examples with reference to the accompanying drawings, in which
Figure 1 shows an example of a shielded conductor employed in the invention,
Figure 2 shows a graph where the ratio of the surface field strength of different conductors has been compared to the corona inception field strength as a function of phase spacing,
Figure 3 shows the strength of the electric field at earth with different conductor configurations,
Figure 4 shows the density of the magnetic flux at earth with different conductor configurations, and
Figures 5-8 show examples of pole constructions for different overhead lines.

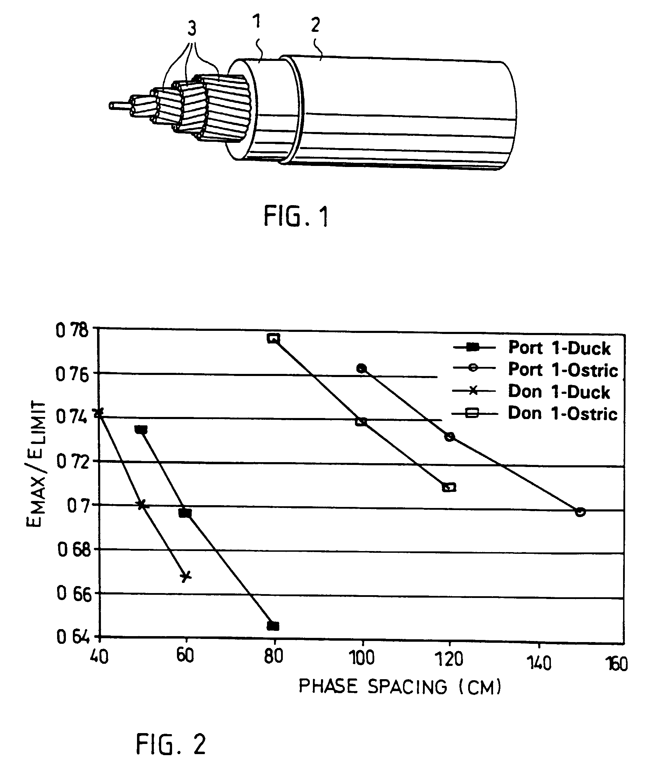

Figure 1 shows a Nokia SAX-355 conductor that can be employed in a shielded high-voltage overhead line of the invention. The current-carrying part of the conductor is a circular conductor of aluminium alloy, stranded of wires 3 and filled. Conductor sheathing 1 is of semi-conductive plastic for neutralizing the electric field and for preventing creation of discharge sites on the surface of the metal conductor. Insulating layer 2 is of crosslinkable XLPE plastic (PEX plastic) used particularly in high-voltage lines, wherein the outermost layer, having a thickness of about 1.5 mm, is doped with carbon black to achieve weatherproofness. Further conductor data: weatherproof and UV radiation-resistant construction, outer diameter 39 mm, mass 1730 kg/km, breaking load 108 kN and load rating 660 A. The 110 kV SAX conductor is shielded with an insulating plastic layer that is far thinner than in a conventional cable construction. The insulation is dimensioned to withstand hitting together of the phase conductors within the span. In a test in which a voltage of 120 kV was applied between two conductors, the conductors were hit together 540 000 times without spark-over. Furthermore, a leaning test of 17 days was performed on the same conductors; in this test the conductors leaned against one another without spark-over.

With the minimum spacings of insulated conductors according to the invention, the conductors are permitted to hit one another for example by the action of short-circuit forces or the wind. The necessary minimum spacings must thus be calculated on other grounds applicable to the situation than on the criteria for a case of short circuit. One starting-point for analysing the minimum spacing of conductors (air insulation) is provided by the electrical safety regulations, in Finland publication No. A4-86 of the Electrical Inspectorate, Helsinki 1986, specifying the minimum requirements for rigid constructions to 1.15 m for bare 110 kV conductors.

Insulation coordination analysis of the overhead line according to the invention, comprising insulated phase conductors, starts from two assumptions:
- the top constructions of the poles protect the entire span; and
- spark-over from phase to earth takes place at a surge voltage of withstand level with a probability of 10%, the voltage strength deviation being 3%.

The object is to dimension the clearance between the phases such that a spark-over in the gap phase-earth is sufficiently more probable than a spark-over in the gap between the phases. Calculations according to the above assumptions showed that the clearance between the phases need only be 3% greater than the clearance between the phase and earth in order for the probability of a spark-over between the phase and earth to be 10-fold compared with the probability of a spark-over between the phases. If the desired probability is 100-fold, the clearance between the phases must respectively be 6% greater.

Since the arcing distance of the 110 kV insulator strings employed by the Applicants is 87 cm and the free clearance at this voltage is 90 cm, the starting-point for the designing has been that between the phases the minimum spacing of live parts is 100 cm, i.e. 10% or more in excess of the phase-earth clearance. When this dimensioning is complied with, an overvoltage produced by a lightning will very probably cause a single-phase earth fault instead of a two-phase short circuit.

Since smaller phase spacings than normal are allowable in the overhead line of the invention which comprises insulated phase conductors, also the problems possibly presented by conductor corona discharge at a 110 kV voltage must be addressed. Therefore, the ratio of the conductor surface field strength to the corona inception field strength as a function of phase spacing was calculated with a voltage of 123 kV. The results are shown in Figure 2. According to the dimensioning criteria employed by the Applicants, this ratio may have a maximum value of 0.72 in built-up areas and a maximum of 0.77 in other areas.

The result of the calculation is dependent on the conductor employed. In testing two conductors, ACSR 305/39 Duck and ACSR 152/25 Ostrich, it was found that with the use of the Duck conductor, the phase spacing could be reduced down to 60 cm, without any problems of corona discharge. Roughly the same also applies to the Nokia SAX 355 conductor. With the Ostrich conductor, the phase spacing must be expanded to 130 cm in order for the surface field strength to be of the same order. It is also to be seen from the graph that when the conductors are located vertically (Don), more advantageous phase spacing values in view of corona performance are achieved than with horizontal setout (Port).

In conclusion, therefore, it can be stated that the minimum distance between the insulated phase conductors can be of the same order as the minimum distance employed in rigid constructions, at least in the case of a 110 kV overhead line.

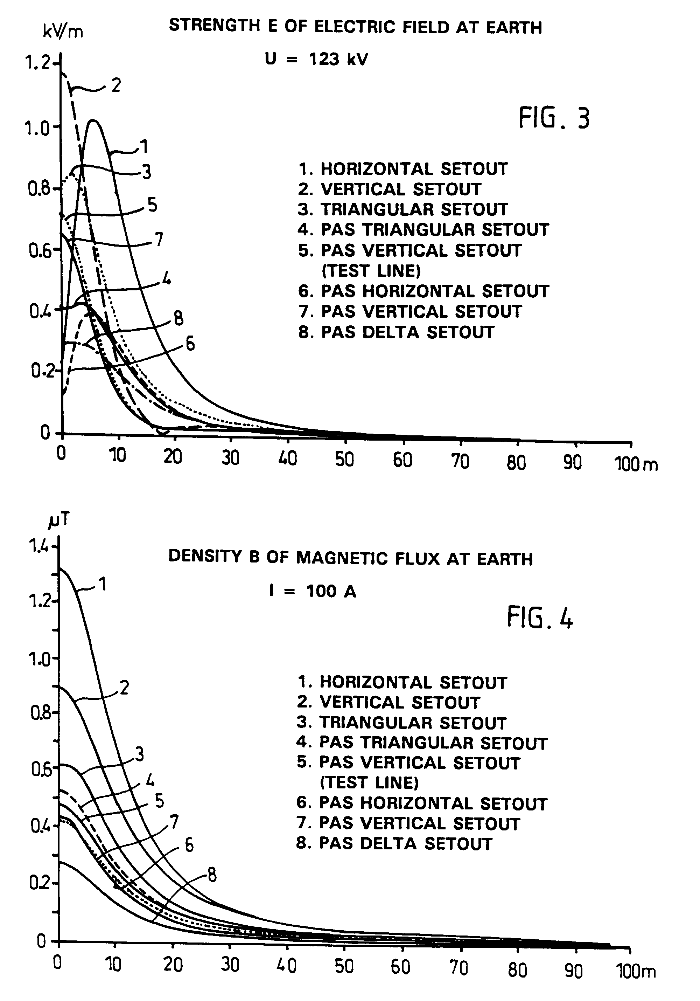

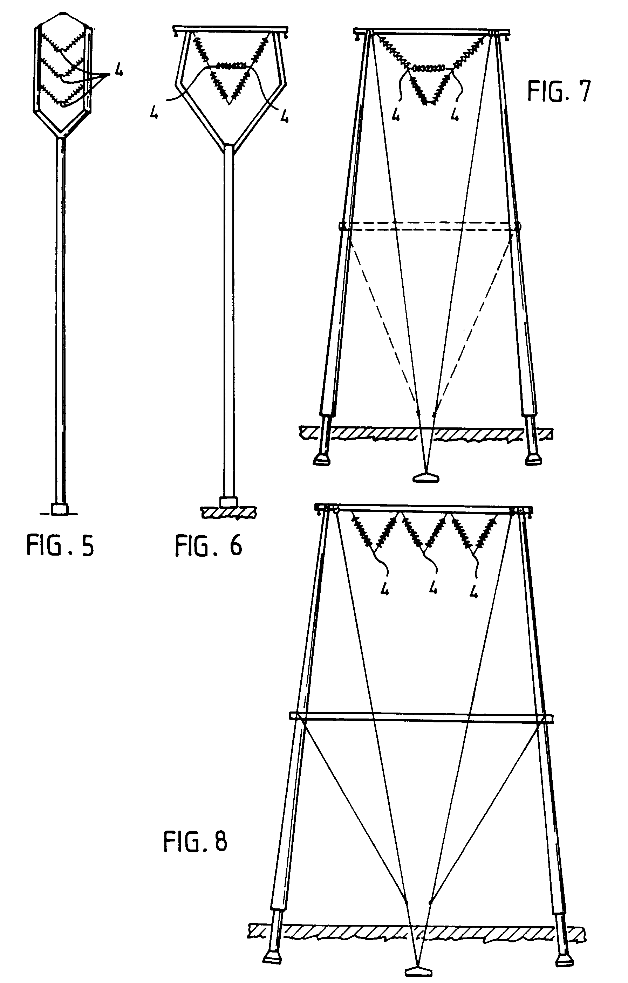

Thus in accordance with the invention it has proved that shielded conductors enable considerable reduction of phase spacings and cutback in conductor streets, or alternatively reduction of the height of pole constructions. The major advantages of the PAS line also include the smallness of the electric and magnetic fields created thereby in comparison with conventional lines, on account of the smaller phase spacing. Figure 3 shows curves illustrating the electric field strengths of a high-voltage overhead line at earth for different conductor types. Figure 4 shows the corresponding magnetic flux densities. The comparison included in accordance with Table 1 a conventional non-insulated line with horizontal, triangular and vertical configurations with standard 3-3.5 m phase spacings, and a PAS line with horizontal, vertical, triangular and delta configurations and phase spacings of 1.15 m. Examples of the configurations are shown in Figures 5-8. In Figure 5 the conductors have a vertical setout, in Figures 6 and 7 a delta setout (the conductors are located at the apices of an equilateral triangle) and in Figure 8 a conventional horizontal setout. The support points for the phase conductors in the constructions are indicated by reference numeral 4 in all figures. The fixing of the phase conductors to pole or tower constructions is resilient, which eliminates conductor vibration problems. The insulators of the phase conductors may be regular insulators fitted at smaller phase spacings.

The basic data for the measuring results shown in Figures 3 and 4 are as follows:
- U = 123 kV
- Load current 100 A, P = 18 MW
- PAS conductor: SAX 355, σₒ = 40 N/mm²
- Bare conductor: ACSR 305/39, σₒ = 40 N/mm²
- Lightning conductor: AACSR 106/25, σₒ = 60 N/mm²
- Temperature of current conductor +15°C
- Temperature of lightning conductor +5°C
- Clearance of lowermost current conductor from earth 5.9 m at +70°C (permitted minimum height)
- Span aₑ = a = 200 m

In terms of the magnetic field, the following observations can be made on the basis of Figures 3 and 4 and Table 1:
- with horizontal setout of the conductors, with a PAS line (Figure 8) the maximum value of flux density decreases to about one third compared with a corresponding non-insulated line. The flux density decreases to the level of background radiation (=0.1 µT) with clearings of 16 m (PAS) and 33 m (regular) from the centre of the line (curves 1 and 6).
- with vertical setout of the conductors, the maximum value of the flux density of a PAS line (Figure 5) decreases to about one half compared with a regular line.
The flux density decreases to the level of background radiation with clearings of 18 m (PAS) and 33 m (regular) from the centre of the line (curves 2 and 7).
- with triangular setout of the conductors, the maximum value of the flux density of the line does not differ to any appreciable extent from the value for a regular line (curves 3 and 4). However, the flux density decreases with PAS conductors to the level of background radiation with a clearing of 21 m from the centre of the line, while in the case of a corresponding non-insulated line the density is 25 m. This rather minor difference is due to the fact that other factors than the spacing of the conductors, for example the free clearance, determine the location of the conductors. Thus the construction is roughly the same with both conductors. However, a PAS line affords reduction to one half of the peak value of the electric field strength (Figure 3).
- delta setout (Figures 6 and 7) of a PAS line is clearly the best solution in view of the fields generated. Compared with a regular non-insulated tower line, the maximum value for the flux density is only about one fifth, and the flux density decreases to the level of background radiation at a distance of 13 metres from the line (curve 8).

**Table 1.**

| Observations on magnetic field. Bₘₐₓ = relative maximum value of flux density of magnetic field 0.1 µT (0.2 µT) = flux density decreases to this level at the distance indicated from the centre of the line. | | | | |
|---|---|---|---|---|
| CONDUCTOR | CURVE NO. | Bₘₐₓ | 0.1 µT (m) | 0.2 µT (m) |
| Regular horiz. | 1 | 1 | 33 | 23 |
| Regular vert. | 2 | 0.68 | 33 | 21 |
| Regular triang. | 3 | 0.45 | 25 | 16 |
| PAS triang. | 4 | 0.39 | 21 | 13 |
| PAS horiz. | 6 | 0.33 | 16 | 10 |
| PAS vert. | 7 | 0.32 | 18 | 11 |
| PAS delta | 8 | 0.21 | 6 | 6 |

It is obvious to one skilled in the art that the different embodiments of the invention are not limited to the examples presented above, but can vary freely within the scope of the ensuing claims.

## Claims

1. A high-voltage overhead line, having aerially drawn insulated phase conductors supported on a pole construction, the spacing between the conductors at the support points (4) of the poles being smaller than the minimum spacing needed to avoid contact between the conductors, the insulation of each conductor comprising an outer layer (2) of weatherproof material, characterized in that the overhead line is suitable for voltages in excess of 100 kV, the insulation further comprises at least an inner layer (1) of a semi-conductive material.

2. A high-voltage overhead line according to Claim 1, wherein the outer layer (2) consists of a cross-linked polyethylene material doped with carbon black.

3. A high-voltage overhead line according to Claim 1 or Claim 2, wherein the phase conductors are arranged in superposed relationship in the transverse plane of the overhead line.

4. A high-voltage overhead line according to Claim 1 or Claim 2, wherein the phase conductors are arranged at the apices of a triangle in the transverse plane of the overhead line.

## Patentansprüche

1. Eine Hochspannungs-Hochleitung mit in der Luft verlegten isolierten, an einer Leitungsmast-Konstruktion abgestützten Phasenleitern, bei der der Abstand der Leiter an den Abstützpunkten (4) der Masten kleiner ist als der für die Verhinderung eines Inberührungkommens der Leiter erforderliche Mindestabstand und bei der die Isolation jedes Leiters einen Außenmantel (2) aus wetterfestem Werkstoff aufweist,
**dadurch gekennzeichnet,**
daß die Hochleitung für Spannungen von mehr als 100 kV geeignet ist und die Isolierung ferner wenigstens einen Innenmantel (1) aus halbleitendem Werkstoff aufweist.

2. Eine Hochspannungsleitung nach Anspruch 1, bei der der Außenmantel (2) aus einem mit Ruß versetztem vernetzten Polyethylen-Werkstoff besteht.

3. Eine Hochspannungsleitung nach Anspruch 1 oder 2, bei der die Phasenleiter in der Transversalebene der Hochleitung übereinander angeordnet sind.

4. Eine Hochspannungsleitung nach Anspruch 1 oder 2, bei der die Phasenleiter an den Scheiteln eines Dreiecks in der Transversalebene der Hochleitung angeordnet sind.

## Revendications

1. Ligne aérienne à haute tension ayant des fils de phase à montage aérien comportant une isolation supportés par une structure de poteaux, l'espacement entre les fils aux points de support (4) des poteaux étant plus petit que l'espacement minimal nécessaire pour éviter un contact entre les fils, l'isolation de chaque fil comprenant une couche externe (2) de matériau étanche aux intempéries, caractérisée en ce que la ligne aérienne convient à des tensions de plus de 100 kV et en ce que l'isolation comprend par ailleurs au moins une couche interne (1) d'un matériau semi-conducteur.

2. Ligne aérienne à haute tension selon la revendication 1, dans laquelle la couche externe (2) est constituée d'une matière de type polyéthylène réticulée dopée au noir de carbone.

3. Ligne aérienne à haute tension selon la revendication 1 ou 2, dans laquelle les fils de phase sont agencés en relation superposée dans le plan transversal de la ligne aérienne.

4. Ligne aérienne à haute tension selon la revendication 1 ou 2, dans laquelle les fils de phase sont agencés aux sommets d'un triangle dans le plan transversal de la ligne aérienne.
